# EUROPÄISCHE PATENTSCHRIFT

(11) **EP 0 692 365 B1**
(45) Veröffentlichungstag und Bekanntmachung des Hinweises auf die Patenterteilung: **02.09.1998**
(21) Anmeldenummer: 95110038.7
(22) Anmeldetag: 28.06.1995
(51) Int. Cl.: B29C 51/26

(54) **Abdeckplatte für Vakuumformmaschinen**
Cover plate for vacuum forming machine
Plaque de recouvrement pour machine de formage sous vide

(30) Priorität: 14.07.1994 DE 4424845
(43) Veröffentlichungstag der Anmeldung: 17.01.1996
(73) Patentinhaber: Georg Geiss Maschinenfabrik, 96145 Sesslach (DE)
(72) Erfinder: Geiss, Manfred, Dipl.-Ing., D-96145 Sesslach (DE)
(74) Vertreter: Weise, Reinhard, Dipl.-Ing.

(56) Entgegenhaltungen:
- AT-A- 223 371
- DE-A- 4 035 224
- FR-A- 2 194 540
- US-A- 3 599 959

## Beschreibung

Die Erfindung betrifft eine Abdeckplattenanordnung für das luftdichte Abschließen eines Bereichs zwischen einem Maschinengehäuseausschnitt einer Vakuumformmaschine und einem rechtwinkligen Fenster, auf dessen Randbereich Kunststoffplatten zur Bearbeitung auflegbar sind.

Vakuumformmaschinen dienen zum Herstellen von Formteilen aus Kunststoffplatten oder -folien. Dabei werden die Kunststoffplatten zunächst bis hin zum thermoplastischen Zustand beheizt, sodann vorgeformt und schließlich mit Hilfe von Vakuum in die fertige Form gebracht.

Moderne Vakuumformmaschinen weisen zu diesem Zweck ein geschlossenes und abgedichtetes Maschinengehäuse auf. Aufgrund dieses geschlossenen Maschinengehäuses ist es möglich, die Kunststoffplatte während des Beheizungsvorganges durch Aufbringen eines geringen Überdrucks zu stützen und damit den Durchhang durch das Eigengewicht auszugleichen. Des weiteren kann die beheizte und plastifizierte Kunststoffplatte nach Beendigung des Beheizungsvorganges durch einen Druckluftstoß vorgeformt werden, um eine Verbesserung der Materialdickenverteilung zu erreichen.

Da in Abhängigkeit vom späteren Fertigteil Kunststoffplatten verschiedener Formate verarbeitet werden müssen, wird das Maschinengehäuse nach oben durch eine Abdeckplatte abgeschlossen. Diese Abdeckplatte hat einen Ausschnitt bzw. ein Fenster, dessen lichten Abmessungen kleiner als die Abmessungen des Kunststoffzuschnitts sind, so daß dieser nach dem Auflegen auf die Abdeckplatte von dieser abgestützt und mittels des von oben herabfahrenden Spannrahmens sicher gehalten wird. Nach dem Auflegen der Kunststoffplatte besteht also das geschlossene und abgedichtete System aus dem Maschinengehäuse, der Abdeckplatte und dem Kunststoffzuschnitt. Aufgrund ihres Aussehens wird diese Abdeckplatte auch als Fensterplatte bezeichnet.

Die Abdeck- bzw. Fensterplatte erfüllt in der Vakuumformmaschine im wesentlichen vier Funktionen. Zum einen dient sie dem Abdecken und Abdichten zwischen dem Maschinengehäuse und der Kunststoffplatte. Des weiteren soll sie die Kräfte des Spannrahmens aufnehmen, der gegen die Fensterplatte drückt und damit die Kunststoffplatte spannt und hält. Darüber hinaus bildet die Abdeck-bzw. Fensterplatte den Anschlag für die später hochfahrende Form. Schließlich bildet die Fensterplatte einen Teil der Abdichtung des Raumes zwischen der Kunststoffplatte und der Form, so daß eine wirksame Aufbringung des Vakuums als der formenden Kraft möglich ist.

Aufgrund dieser multifunktionalen Anforderungen ist eine solche Fensterplatte relativ kompliziert; wegen der auf sie einwirkenden Kräfte muß sie auch eine erhebliche Eigensteifigkeit besitzen. Weiterhin muß die Fensterplatte für jeden Plattenzuschnitt bzw. für jede Form in Abhängigkeit von deren Abmessungen extra angefertigt werden, was insbesondere bei Kleinserien zu erhöhten Produktionskosten führt.

Es sind zwar auch Systeme mit verschiebbaren Rahmenteilen bekannt. Bei diesen bekannten Systemen müssen jedoch für jede Breite zwei fixe Leisten und zusätzlich ein Deckblech gefertigt werden, das die Aufgabe der Abdichtung übernimmt. Diese Variante ist zwar vom Gewicht her leichter, jedoch umständlicher zu handhaben und weist außerdem funktionelle Nachteile auf, wie geringere Steifigkeit, schlechtere Abdichtung wegen der Vielzahl der Einzelteile usw.

Aus der AT-A-223 371 ist ein Spannrahmen für Folien oder Platten, insbesondere Kunststoffplatten bekannt, der aus vier vertikal orientierten Rahmenleisten besteht, die jeweils einen Knebel zur Fixierung einer variablen formatentsprechenden Rahmeneinstellung sowie eine angebrachte Klemm- bzw. Haltevorrichtung für die Kunststoffplatte aufweist. Als nachteilig ist bei diesem Spannrahmen anzusehen, daß mit diesem allein noch kein luftdichter Abschluß bei verschieden großen Kunststoffplattenformaten für Vakuumformmaschinen möglich ist. Vielmehr werden zusätzliche Abdeckungen bzw. Überbrückungen zum Maschinengehäuseausschnitt der Vakuumformmaschine zur Erzielung einer abgeschlossenen Maschinenbox benötigt, um insbesondere bei kleinen Fenstern, die im Bereich zwischen dem Maschinengehäuseausschnitt der Vakuumformmaschine und dem das Format bildenden Rahmen zu überbrücken, wobei hinsichtlich der Forderung an Luftdichtigkeit noch zusätzliche Dichtungen benötigt würden.

Der Erfindung liegt die Aufgabe zugrunde, eine Abdeckplattenanordnung der eingangs genannten Gattung verfügbar zu machen, die schnell und einfach eine stufenlose Einstellung eines Fensters ermöglicht und den vorgesehenen Kraftaufnahme- und Abdichtbedingungen beim Vakuumformen bei kompakter Ausbildung genügt.

Erfindungsgemäß wird diese Aufgabe durch die im Patentanspruch 1 genannten Merkmale gelöst. Bevorzugte Merkmale, die der Erfindung vorteilhaft weiterbilden, sind in den nachgeordneten Patentansprüchen angegeben.

Die Abdeck- bzw. Fensterplatte besteht also aus mehreren Einzelplatten, die im Bereich des Ausschnitts des Maschinengehäuses auf diesem aufliegen und zur stufenlosen Änderung der lichten Abmessungen des Ausschnitts bzw. Fensters der Abdeckplatte relativ zueinander verschiebbar sind. Auf diese Weise können mit einer einzigen Ausrüstung die lichten Abmessungen des Fensters den verschiedenen Formaten der zu verarbeitenden Kunststoffzuschnitte stufenlos angepaßt werden.

Es sind insgesamt vier Einzelplatten vorgesehen, mit deren Hilfe ein rechteckiges Fenster mit gewünschten Abmessungen gebildet werden kann. Die einzelnen Platten liegen in einer gemeinsamen Ebene und sind an ihren aneinanderstoßenden Rändern untereinander gleitend geführt, so daß eine leichte gegenseitige Verschiebung der Einzelplatten möglich ist.

Die gleitende Führung der Einzelplatten untereinander wird dadurch erreicht, daß sie an den aneinanderstoßenden Rändern bzw. Kanten jeweils einen leistenartigen Führungsvorsprung bzw. eine Führungsschiene und eine hierzu korrespondierende Führungsnut tragen, wobei der Führungsvorsprung bzw. die Führungsschiene der einen Einzelplatte jeweils in die Führungsnut der benachbarten Einzelplatte gleitend eingreift. Die Einzelplatten sind auf diese Weise jeweils parallel zu den miteinander in Verbindung stehenden Rändern verschiebbar.

Nach einem weiteren Ausführungsbeispiel der Erfindung ist der Führungsvorsprung bzw. die Führungsschiene und die dazu korrespondierende Führungsnut der Einzelplatten im Querschnitt etwa schwalbenschwanzförmig derart gestaltet, daß sich deren Dicke bzw. Höhe nach außen hin kontinuierlich vergrößert. Aufgrund dieser Ausbildung sind die Platten aneinander gehalten und bilden in ihrer Gesamtheit einen Plattenverbund mit leichter Verschiebbarkeit der Einzelplatten gegeneinander.

Um eine sichere Abdichtung gegen Vakuum zu erreichen, ist im Bereich der aneinanderstoßenden Ränder an der Oberseite der Einzelplatten jeweils eine Dichtung angeordnet. Eine weitere Dichtung kann im Bereich der aneinanderstoßenden Ränder der Einzelplatten jeweils stirnseitig eingesetzt sein, um die vertikale Abdichtung über die Dicke der Platten zu übernehmen.

Die Größe der Einzelplatten ist derart gewählt, daß auch bei Einstellung des kleinsten Fensters die Einzelplatten über den Rand des Ausschnitts im Maschinengehäuse hinausragend auf dem Maschinengehäuse aufliegen. Andererseits ist die Maschinenkonstruktion so ausgeführt, daß alle Einzelplatten kollisionsfrei bis zum größten gewünschten Fensterausschnitt verschoben werden können.

Die Einzelplatten weisen eine Dicke auf, die ihnen große Steifigkeit und Stabilität verleihen, insbesondere auch durch die Anordnung und Ausbildung der Führungsschiene und Führungsnut. Der in Abhängigkeit von den Abmessungen der zu verarbeitenden Kunststoffplatte erforderliche lichte Ausschnitt der Abdeckplatte läßt sich schnell und einfach durch Verschieben einer oder mehrerer Einzelplatten zueinander herbeiführen.

Die Erfindung wird nun anhand eines Ausführungsbeispiels im Zusammenhang mit der Zeichnung näher erläutert. Es zeigen:
- Fig. 1: einen schematisierten Schnitt durch das Maschinengehäuse einer Vakuumformmaschine mit aufgelegter Abdeckplattenanordnung;
- Fig. 2: eine schematisierte Draufsicht auf die Abdeckplattenanordnung, gleichfalls schematisiert, und
- Fig. 3: einen Querschnitt im Bereich der Ränder zweier aneinanderstoßenden Einzelplatten in vergrößerter Darstellung.

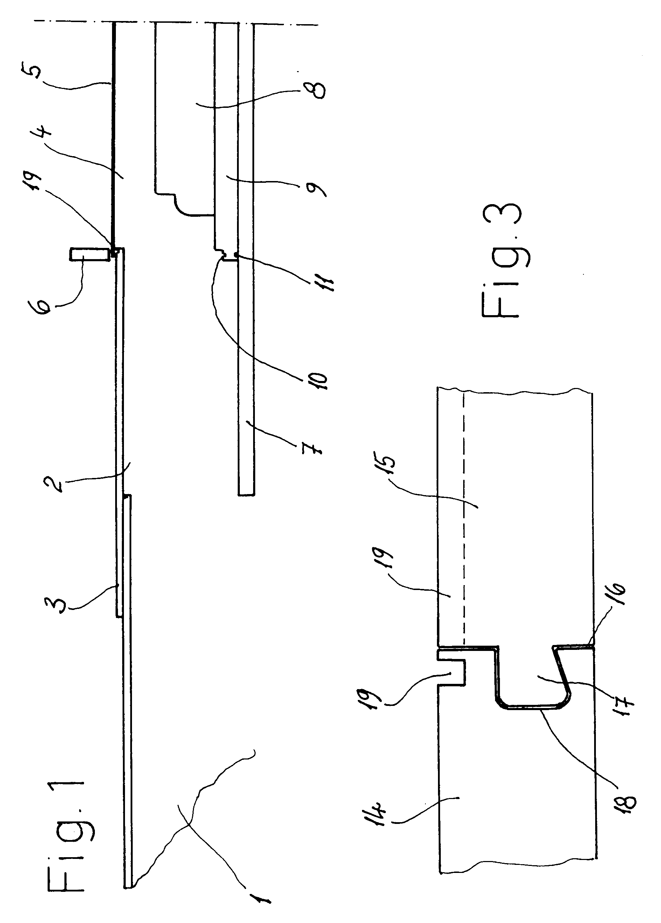

In Fig. 1 ist das Maschinengehäuse der Vakuumformmaschine mit dem Bezugszeichen 1 bezeichnet. Das Maschinengehäuse 1 weist an seiner Oberseite einen Ausschnitt 2 auf, dessen Abmessungen auf den größtmöglich zu verarbeitenden Kunststoffzuschnitt abgestimmt sind. Im Bereich des Ausschnitts 2 des Maschinengehäuses 1 liegt, den Ausschnitt 2 zum Teil abdeckend, die Abdeckplattenanordnung 3 auf, die gleichfalls einen fensterartigen Ausschnitt 4 besitzt und deshalb auch als "Fensterplatte" bezeichnet wird. Auf diesem Fenster 4 liegt der Kunststoffzuschnitt bzw. die Kunststoffplatte 5, die verarbeitet werden soll, auf. Die Kunststoffplatte 5 wird durch den von oben auf sie abgesenkten Spannrahmen 6 an die Abdeckplattenanordnung 3 angedrückt gehalten und gespannt. Unterhalb des Fensters 4 bzw. des Ausschnitts 2 ist der in Höhenrichtung verlagerbare Maschinentisch 7 angeordnet, der die Form 8 trägt. An der Form 8 oder einer Formplatte 9 sind periphere Dichtungen 10 und 11 angeordnet, die die Abdichtung zwischen der Form 8 und der Abdeckplattenanordnung 3 (Dichtung 10) sowie zwischen der Form 8 und dem Maschinentisch 7 (Dichtung 11) bewirken, so daß das Vakuum verlustfrei oder nahezu verlustfrei bei der Verformung der zuvor plastifizierten Kunststoffplatte 5 auf diese einwirken kann bzw. der Differenzdruck zwischen dem Vakuum und dem atmosphärischen Druck voll wirksam wird.

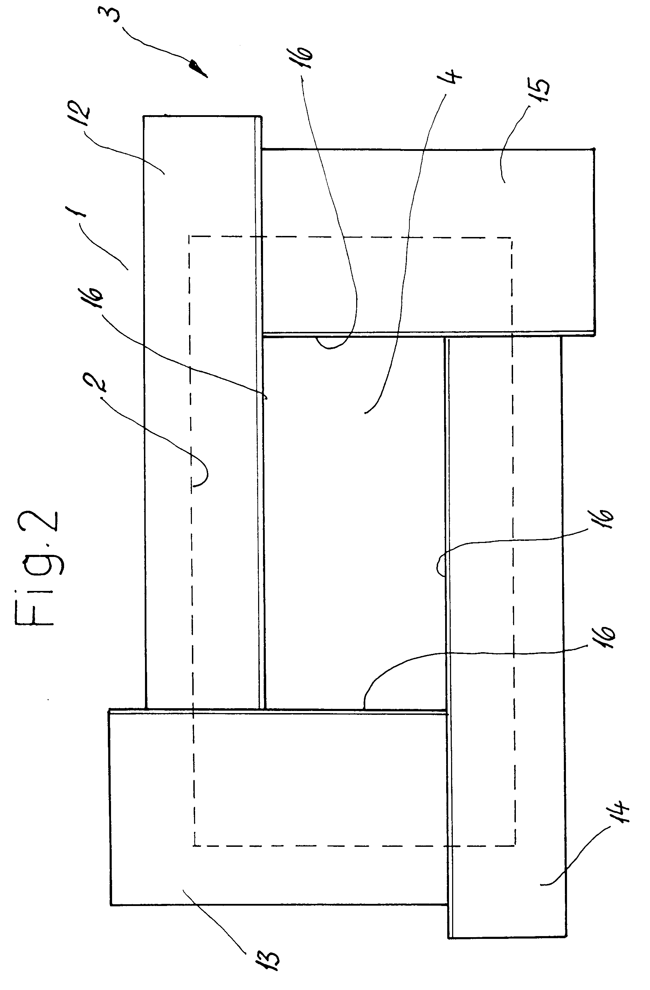

Wie insbesondere aus Fig. 2 hervorgeht, besteht die auf dem Maschinengehäuse 1 im Bereich dessen Ausschnitts 2 (gestrichelt gezeichnet) aufliegende Abdeckplattenanordnung 3 aus vier Einzelplatten 12, 13, 14 und 15 mit jeweils rechteckigem Umriß. Die Platten 12 bis 15 liegen in ein und derselben Ebene und stoßen aneinander dicht an. Die Einzelplatten 12 bis 15 sind längs ihrer aneinanderstoßenden Ränder 16 verschiebbar, so daß die lichten Abmessungen des Fensters 4 , das durch die einzelnen Platten 12 bis 15 gebildet und begrenzt wird, beliebig stufenlos geändert werden können, je nachdem welche Abmessungen die zu verarbeitende Kunststoffplatte 5 hat. Durch das stufenlose Verschieben der Platten 12 bis 15 gegeneinander kann das auf das Format der zu verarbeitenden Kunststoffplatte 5 abgestimmte Fenster 4 beliebig zwischen den vorgegebenen Abmessungen des Ausschnitts 2 des Maschinentisches 1 und einem kleinsten Fenster 4 geändert werden, wobei die Größe der Einzelplatten 12 bis 15 so gewählt ist, daß sie auch bei Einstellung des kleinsten Fensters 4 noch auf dem Maschinentisch 1 aufliegen, d.h. mit ihren außenliegenden Rändern die Ränder des Ausschnitts 2 übergreifen.

Wie insbesondere aus Fig. 3 hervorgeht, sind die Einzelplatten 12 bis 15 an ihren aneinanderstoßenden Rändern 16 ineinandergreifend gleitend gefuhrt. Zu diesem Zweck weisen die Einzelplatten jeweils einen leistenartigen Führungsvorsprung bzw. eine Führungsschiene 17 auf, der in eine Führungsnut 18 der benachbarten Einzelplatte eingreift. Der Führungsvorsprung 17 ist etwa schwalbenschwanzförmig gestaltet, wobei sich dessen Dicke bzw. Höhe nach außen vergrößert. Dieser Führungsvorsprung 17 greift in die entsprechend ausgebildete Führungsnut 18 ein, so daß sich ein Verbund zwischen den Einzelplatten 12 bis 15 in der Art einer formschlüssigen Verbindung untereinander ergibt. Die Abmessungen der Führungsnut 18 sind hierbei geringfügig größer als die entsprechenden Abmessungen des Führungsvorsprungs 17, so daß ein leichtes Gleiten zwischen Führungsvorsprung 17 und Führungsnut 18 in Richtung der jeweils paarweise aneinanderstoßenden Ränder 16 und damit ein gegenseitiges Verschieben der Einzelplatten 12 bis 15 relativ zueinander möglich ist. An der Oberseite der Einzelplatten 12 bis 15 im Bereich ihrer aneinanderstoßenden Ränder 16 ist noch eine Nut 19 zur Aufnahme einer entsprechenden Dichtung angeordnet. Eine derartige Dichtung kann auch im Stirnbereich der Ränder 16 vorgesehen sein, um eine vertikale Abdichtung über die Dicke der Platten 12 bis 15 zu erreichen. Durch die vier Einzelplatten 12 bis 15 wird also ein rechteckiges Fenster 4 gebildet, dem durch Verschieben der Platten gegeneinander stufenlos eine jeweils gewünschte und erforderliche Größe gegeben werden kann. Aufgrund der Steifigkeit der Einzelplatten 12 bis 15 sowie dem durch die formschlüssig gleitende Verbindung der Platten untereinander erhaltenen Plattenverbund ist dieser in der Lage, die auf ihn einwirkenden Kräfte sicher aufzunehmen.

## Patentansprüche

1. Abdeckplattenanordnung für das luftdichte Abschließen eines Bereichs zwischen einem Maschinengehäuseausschnitt (2), einer Vakuumformmaschine und einem rechtwinkligen Fenster (4), dessen Größe an unterschiedliche Größen von Kunststoffplatten zu deren haltendem Auflegen auf den Randbereich des Fensters anpassbar ist,
wobei die Anordnung vier in einer gemeinsamen Ebene liegende Einzelplatten (12 - 15) aufweist, die den Maschinengehäuseausschnitt (2) zum Teil abdeckend auf dem Maschinengehäuse um den Bereich des Ausschnitts (2) aufliegen und miteinander an ihren aneinanderstoßenden Rändern (16) formschlüssig gleitend geführt verbunden sind, und
wobei an der Oberseite der Anordnung im Bereich der das Fenster (4) bildenden Ränder der Einzelplatten (12 - 15) jeweils eine Dichtungsnut (19) für die Aufnahme einer Dichtung gebildet ist.

2. Anordnung nach Anspruch 1,
dadurch gekennzeichnet,
daß jeweils rechteckig ausgebildete Einzelplatten (12 - 15) zur Bildung eines rechteckigen Fensters (4) vorgesehen sind.

3. Anordnung nach Anspruch 1 oder 2,
dadurch gekennzeichnet,
daß die Einzelplatten (12 - 15) an den aneinanderstoßenden Rändern (16) jeweils einen leistenartigen Führungsvorsprung bzw. eine Führungsschiene (17) bzw. eine Führungsnut (18) aufweisen, wobei der Führungsvorsprung (17) der einen Einzelplatte jeweils in die Führungsnut (18) der benachbarten Einzelplatte unter Gleitführung jeweils in Richtung zweier aneinanderstoßenden Ränder (16) eingreift.

4. Anordnung nach Anspruch 3,
dadurch gekennzeichnet,
daß der Führungsvorsprung bzw. die Führungsschiene (17) und die dazu korrespondierende Führungsnut (18) der Einzelplatten (12 - 15) im Querschnitt etwa schwalbenschwanzförmig gestaltet sind.

5. Anordnung nach einem der vorangehenden Ansprüche,
dadurch gekennzeichnet,
daß im Bereich der aneinanderstoßenden Ränder (16) der Einzelplatten (12 - 15) jeweils eine stirnseitig eingesetzte Dichtung angeordnet ist.

6. Anordnung nach einem der vorangehenden Ansprüche,
dadurch gekennzeichnet,
daß die Größe der Einzelplatten (12 - 15) derart gewählt ist, daß auch bei Einstellung des kleinsten Fensters (4) die Außenränder der Einzelplatten (12 - 15) über die Ränder des Ausschnitts (2) im Maschinengehäuse (1), diese überlappend, greifen und die Einzelplatten (12 - 15) auf dem Maschinengehäuse (1) aufliegen.

## Claims

1. Cover plate system for air-tight sealing of a zone between a cut-out (2) in a machine case of a vacuum forming machine and a rectangular window (4) having a size which may be matched with different sizes of plastic plates for holding and placing the latter on the edge zone of the window,
the system including four single plates (12 - 15) located in a common plane, which rest on the machine case around the zone of the cut-out (2) whilst they partly cover said cut-out 82) of the machine case and are connected to each other by their adjoining edges (16) by a form-locking sliding guide, and
wherein a respective sealing groove (19) is formed on the upper side of the system in the zone of the edges, which form said window (4), of said single plates (12 to 15) for receiving a seal.

2. System according to Claim 1,
characterized in
that single plates (12 to 15), each of a rectangular configuration, are provided to form a rectangular window (4).

3. System according to Claim 1 or 2,
characterized in that
said single plates (12 to 15) include each a strip-like guiding projection or guiding rail (17), respectively, or a guiding groove (18) on their adjoining edges (16), with said guiding projection (17) of one single plate being engaged in the guiding groove (17) of the adjacent single plate for sliding guiding action along the direction of two adjoining edges (16).

4. System according to Claim 3,
characterized in that
said guiding projection or guiding rail (17), respectively, and the corresponding guiding groove (18) of said single plates (12 to 15) present a cross-sectional configuration in an approximately dovetailed shape.

5. System according to any of the preceding Claims,
characterized in that a respective seal inserted on the face side is disposed in the zone of said adjoining edges (16) of said single plates (12 to 15).

6. System according to any of the preceding Claims,
characterized in that
the size of said single plats (12 to 15) is so selected that the outside edges of said single plats (12 to 15) engage over the edges of said cut-out (2) in said machine case (1), overlapping same, even when the smallest window (4) is set, and that said single plates (12 to 15) rest on said machine case (1).

## Revendications

1. Agencement de plaque de recouvrement pour fermer de manière étanche à l'air une zone comprise entre une découpe (2) de la caisse d'une machine de formage sous vide et une fenêtre rectangulaire (4) dont la grandeur peut être adaptée à différentes grandeurs de plaques de matière plastique qui doivent être maintenues en place sur la zone marginale de la fenêtre, l'agencement présentant quatre plaques individuelles (12 à 15) qui se trouvent dans un plan commun, qui sont en place, en recouvrant partiellement la découpe (2) de la caisse de la machine, sur la caisse de la machine autour de la zone de la découpe (2) et sont reliées les unes aux autres avec épousement de formes, guidées à glissement au niveau de leurs bords (16) qui se touchent, et une rainure d'étanchéité (19) étant ménagée respectivement sur la face supérieure de l'agencement dans la zone des bords des plaques individuelles (12 à 15) formant la fenêtre (4) afin de recevoir une garniture d'étanchéité.

2. Agencement selon la revendication 1,
caractérisé en ce que des plaques individuelles rectangulaires (12 à 15) sont respectivement prévues pour former une fenêtre rectangulaire (4).

3. Agencement selon la revendication 1 ou 2,
caractérisé en ce que les plaques individuelles (12 à 15) présentent, au niveau des bords (16) qui se touchent, respectivement une saillie de guidage en forme de languette ou un rail de guidage (17) ou une rainure de guidage (18), la saillie de guidage (17) d'une plaque individuelle s'engageant respectivement dans la rainure de guidage (18) de la plaque voisine par guidage à glissement respectivement dans la direction de deux bords (16) qui se touchent.

4. Agencement selon la revendication 3,
caractérisé en ce que la saillie de guidage ou le rail de guidage (17) et la rainure de guidage (18) correspondante des plaques individuelles (12 à 15) sont conformés en coupe transversale plus ou moins en queue-d'aronde.

5. Agencement selon l'une quelconque des revendications précédentes,
caractérisé en ce que une garniture d'étanchéité insérée en about est respectivement agencée dans la zone des bords (16) se touchant des plaques individuelles (12 à 15).

6. Agencement selon l'une quelconque de revendications précédentes,
caractérisé en ce que la grandeur des plaques individuelles (12 à 15) est choisie de telle sorte que, même lorsqu'elles sont réglées sur la fenêtre (4) la plus petite, les bords extérieurs des plaques individuelles (12 à 15) s'étendent par-dessus sur les bords de la découpe (2) de la caisse (1) de la machine, en chevauchant ces bords, et les plaques individuelles (12 à 15) sont en place sur la caisse (1) de la machine.
